(19) Europäisches Patentamt
European Patent Office
Office européen des brevets

(11) Publication number: **0 184 317**
**A2**

(12) # EUROPEAN PATENT APPLICATION

(21) Application number: 85307850.9

(22) Date of filing: 30.10.85

(51) Int. Cl.4: D 01 F 9/10

(30) Priority: 04.12.84 US 678093

(43) Date of publication of application:
11.06.86 Bulletin 86/24

(84) Designated Contracting States:
DE FR GB

(71) Applicant: GENERAL MOTORS CORPORATION
General Motors Building 3044 West Grand Boulevard
Detroit Michigan 48202(US)

(72) Inventor: Yetter, Wilson Earl
812 Thurston Road
Rochester New York 14619(US)

(72) Inventor: Smith, George Wolfram
1882 Melbourne
Birmingham Michigan 48009(US)

(72) Inventor: D'Aniello, Michael Joseph, Jr.
950 Francis Street
Rochester Michigan 48063(US)

(74) Representative: Haines, Arthur Donald et al,
GM Patent Section Luton Office (F6) P.O. Box No. 3
Kimpton Road
Luton, Beds LU2 OSY(GB)

(54) **Graphite fibre growth employing nuclei derived from iron pentacarbonyl.**

(57) Submicron iron nuclei for growing graphite fibres by pyrolysis of a gaseous hydrocarbon compound, preferably methane, are formed by controlled decomposition of iron pentacarbonyl vapors.

# GRAPHITE FIBRE GROWTH EMPLOYING NUCLEI DERIVED FROM IRON PENTACARBONYL

## Background of the Invention

This invention relates to a process for producing graphite fibres by pyrolysis of a hydrocarbon gas, preferably natural gas.

It is known that graphite fibres may be produced by thermal decomposition of a hydrocarbon gas. The fibres grow in two stages. During a first stage, nascent carbon reacts with a suitable metal nuclei to produce microscopic carbon filaments. During a second stage, deposition of additional pyrolytic carbon thickens the filaments into fibres. The product fibres are preferably 5 to 15 micrometres in diameter and up to several centimetres long.

Minute iron particles are preferred nuclei for forming the filaments during the first stage. Iron particles may be formed, for example, by evaporating a ferric nitrate solution on a suitable surface and decomposing the resulting iron oxide residue. Although this method produces an abundance of iron particles, only a fraction of these particles are suitably small (cross-sectional dimension preferably less than 0.1 micrometre) to catalyze filament formation.

In a method for manufacturing graphite fibres according to the present invention, by pyrolysis of a gaseous hydrocarbon compound in the presence of iron nuclei distributed upon a suitable growing surface, whereupon said nuclei react with pyrolytic carbon derived from the hydrocarbon compound to grow microscopic carbon filaments that thicken into product fibres, the method includes forming the iron nuclei by exposing the surface to a gas containing iron pentacarbonyl vapors and heating the gas at a

temperature between 300°C and 500°C to decompose the iron pentacarbonyl to produce iron particles that deposit onto the surface and form said iron nuclei.

Thus it is an object of this invention to provide a process for growing graphite fibres on a suitable surface by pyrolysis of a gaseous hydrocarbon compound that comprises seeding the surface prior to hydrocarbon pyrolysis with an abundance of particulate iron nuclei for catalyzing carbon filament formation, which nuclei are formed by controlled decomposition of a vaporous iron compound. A main feature of this invention is that the iron may be introduced into a reaction vessel in the gas phase and particles deposited onto the growing surface without the necessity for direct contact of the kind required to apply a liquid solution. Within the reaction vessel, the iron compound is decomposed at a temperature and under conditions that produce an optimum distribution of particles of an effective size for catalyzing filament formation.

Summary of the Invention

In accordance with a preferred embodiment of this invention, iron pentacarbonyl vapors are carried by an argon gas stream into a suitable reaction vessel and heated at a temperature between 300°C and 400°C. At this temperature, the iron pentacarbonyl decomposes to produce minute iron particles, which particles then deposit onto a surface within the reaction vessel. Thereafter, a gas containing a suitable hydrocarbon compound is introduced into the reaction vessel and the vessel is heated to a temperature effective to pyrolyze the hydrocarbon. The nascent carbon formed reacts with

the minute iron particles to form microscopic carbon filaments. The microscopic filaments are subsequently thickened to produce the product fibres.

Detailed Description of the Invention

In a preferred embodiment, this invention is particularly suited for growing graphite fibres by a natural gas pyrolysis process. The fibres are grown within a cylindrical tubular quartz reactor having a gas inlet at one end and an outlet at the opposite end. The inner diameter of the reactor is 1.7 centimetres. The fibres grow upon the interior reactor wall within a heated midsection which is about 20 centimetres long.

Prior to natural gas pyrolysis, the reactor wall is nucleated by in-situ decomposition of an iron carbonyl compound. The reactor is heated to about 330$^{o}$C. About 1.5 micrograms (1 microlitre) of liquid iron pentacarbonyl, $Fe(CO)_5$, are injected into a stream of ambient temperature argon gas, whereupon the iron carbonyl vaporizes. The argon stream then carries the vapors into the reactor. The gas flow rate within the reactor is about 30 cubic centimetres per minute, resulting in a residence time of the argon gas within the heated midsection of about 51 seconds. Under these conditions, the iron carbonyl compound decomposes within the heated zone and produces an abundance of spherical iron particles that deposit onto the inner reactor wall. The particles have diameters within the range of 30 to 100 nanometres and are suitably dispersed on the reactor wall for growing a large number of fibres.

Graphite fibres are then grown by a preferred two-step process comprising thermal decomposition of

methane from a natural gas source. The temperature of the reactor is increased to about 1050°C. A mixture of hydrogen gas and about 11 volume percent natural gas (about 97 volume percent methane) is admitted to the reactor at a rate of about 40 cubic centimetres per minute for about one-half hour. During this time, carbon derived from methane pyrolysis reacts with the iron particles on the reactor wall to produce microscopic carbon filaments that protrude from the wall. Thereafter, undiluted natural gas is flowed into the reactor at a rate of 40 cubic centimetres per minute for about 20 minutes while the temperature is maintained at about 1050°C. Additional carbon deposits onto the filaments to thicken the filaments into the product fibres. The product fibres are substantially identical to fibres produced by natural gas pyrolysis using other types of nuclei, for example, nuclei derived from decomposition of an iron nitrate solution.

Thus, the method of this invention forms submicron iron nuclei by decomposing vaporous iron pentacarbonyl exposed to a suitable growth surface and utilizes the nuclei to grow graphite fibres from pyrolytic carbon. The iron carbonyl compound dissociates in accordance with the following reaction:

$$Fe(CO)_5 \longrightarrow Fe + 5CO$$

The rate for this reaction is dependent upon temperature. It is desired that the reaction take place within a time sufficient to form the iron particles within the reaction zone, i.e., less than the residence time. By residence time, it is meant the

mean time required for nonreactive gas molecules to travel through the reaction zone, which is related to reactor geometry and gas flow rate. Also, it is desired that the iron particles be evenly distributed on the available surface to maximize the area effective for fibre growth. It is believed that this requires a reaction time greater than one-tenth the residence time. At a reaction temperature above about 500°C, decomposition of the iron carbonyl is extremely fast and cannot be controlled. As a result, the iron tends to deposit as an agglomerated mass near the entrance to the reaction zone, instead of forming the desired distribution of discrete microparticles over the available growing surface. At a temperature below about 300°C, the reaction time is prolonged so that a substantial portion of the iron carbonyl leaves the system without dissociation. A temperature between about 300°C and 400°C is preferred. Although in the described embodiment the iron carbonyl compound was initially blended with argon gas, other inert gas may be substituted as the carrier.

In the preferred embodiment of the invention, the fibres are grown by a preferred two-step methane pyrolysis process described in co-pending European patent application No.85305291.8. Initially, the iron nuclei are reacted with the methane-derived carbon to form microscopic filaments. During this step, a predominantly hydrogen gas comprising about 5 to 15 volume percent methane is flowed over the nucleated surface and heated at a temperature preferably between about 1000°C and 1100°C. After the filaments are formed, the methane concentration in the gas phase is

increased to above 25 volume percent to thicken the filaments into fibres. During this thickening step, undiluted natural gas is preferred. Although in the preferred embodiment the fibres are formed by methane pyrolysis, the iron nuclei are suitable for growing graphite fibres by decomposition of other gaseous hydrocarbons, for example, benzene.

Claims:

1. A method for manufacturing graphite fibres by pyrolysis of a gaseous hydrocarbon compound in the presence of iron nuclei distributed upon a suitable growing surface, whereupon said nuclei react with pyrolytic carbon derived from the hydrocarbon compound to grow microscopic carbon filaments that thicken into product fibres, characterised in that the iron nuclei are formed by exposing the surface to a gas containing iron pentacarbonyl vapors and heating the gas at a temperature between 300°C and 500°C to decompose the iron pentacarbonyl to produce iron particles that deposit onto the surface and form said iron nuclei.

2. A method for manufacturing graphite fibres according to claim 1, in which the nuclei-bearing surface is contacted with a hydrogen gas stream comprising about 5 to 15 volume percent methane from a natural gas source at a temperature sufficient to decompose the methane and to react carbon derived thereby with the iron nuclei to grow said microscopic carbon filaments, and thereafter the filaments are contacted with a gas comprising at least 25 volume percent methane from a natural gas source at a temperature sufficient to deposit additional pyrolytic carbon to thicken the filaments to form the product fibres, characterised in that prior to methane pyrolysis, the iron nuclei are deposited onto the surface by passing into contact therewith a predominantly inert gas stream containing the iron pentacarbonyl vapors.